# EUROPEAN PATENT APPLICATION

(11) **EP 4 578 618 A1**
(43) Date of publication of application: **02.07.2025**
(21) Application number: 24223184.3
(22) Date of filing: 24.12.2024
(51) Int. Cl.: B29C 31/00, B29C 33/36, B29C 44/42, B29C 45/17

(54) **CIRCULATING-TYPE FOAM-MOLDED ARTICLE MANUFACTURING DEVICE AND METHOD**

(30) Priority: 28.12.2023 KR 20230194386
(71) Applicant: Hyundai Transys Inc., Chungcheongnam-do 31930 (KR)
(72) Inventor: KIM, Sung Ho, 18463 Hwaseong-si, Gyeonggi-do (KR); KWAK, Kyung Tak, 18463 Hwaseong-si, Gyeonggi-do (KR)
(74) Representative: Viering, Jentschura & Partner mbB Patent- und Rechtsanwälte

(57) **Abstract**

A circulating-type foam-molded article manufacturing device is capable of automatically replacing a foam-molded article manufacturing mold in a circulating foam-molded article manufacturing line. The circulating-type foam-molded article manufacturing device includes a circulation conveyance part configured to circulate along a production line, a mold carrier connected to the circulation conveyance part and configured to circulate along the production line, the mold carrier being configured such that a mold cart, on which a foam-molded article manufacturing mold is mounted, is loaded onto or unloaded from the mold carrier, and a cart loading/unloading part configured to load the mold cart onto an upper portion of the mold carrier or unload the mold cart from the upper portion of the mold carrier.

## Description

### TECHNICAL FIELD

The present invention relates to a circulated-type foam molded article manufacturing device and method. More specifically, the present invention relates to a circulating-type foam-molded article manufacturing device and method capable of automatically replacing a foam-molded article manufacturing mold in a circulating foam-molded article manufacturing line.

### BACKGROUND ART

As a seat member for a vehicle, a foam pad, which is made by foaming a material, such as polyurethane (PU), in a predetermined shape is used. The foam pad may be manufactured by inputting a foam material, such as a polyurethane copolymer, into a pad mold for manufacturing the foam pad, foaming the foam material, and ejecting the foam material.

For example, Korean Patent Application Laid-Open No. 10-2013-0079299 discloses a production system that is a system for producing mold components from polyurethane and is configured such that a plurality of molds is moved by mold carriages along an elliptical production line. In the system, the mold carriage is equipped with rolls. The mold carriages are conveyed along the production line by supply carriages configured to rotate along a chain. The mold carriage is configured to be loaded into the production line or unloaded out of the production line, such that the mold carriage may be replaced.

However, in the production system in the related art, because the mold carriage, which is equipped with the rolls and configured to move, needs to be attached to or detached from the supply carriage, there occurs a problem in that the mold carriage is not accurately attached or detached when the mold carriage is attached to or detached from the supply carriage.

In addition, in the production system in the related art, there is a problem in that guide bars for conveying the mold carriage need to be provided at loading and unloading positions on the mold carriage.

### [Document of Related Art]

### [Patent Document]

Korean Patent Application Laid-Open No. 10-2013-0079299

### SUMMARY OF THE INVENTION

The present invention has been made in an effort to solve the above-mentioned problem, and an object of the present invention is to provide a circulating-type foam-molded article manufacturing device and method capable of automatically replacing foam-molded article manufacturing molds by replacing the molds by loading a cart, on which the mold is mounted, onto a carrier that circulates along a production line or unloading a cart loaded onto the carrier.

The present invention provides a circulating-type foam-molded article manufacturing device including a circulation conveyance part configured to circulate along a production line, a mold carrier connected to the circulation conveyance part and configured to circulate along the production line, the mold carrier being configured such that a mold cart, on which a foam-molded article manufacturing mold is mounted, is loaded onto or unloaded from the mold carrier, and a cart loading/unloading part configured to load the mold cart onto an upper portion of the mold carrier or unload the mold cart from the upper portion of the mold carrier.

In the embodiment, the cart loading/unloading part may include: a loading side cart loading/unloading part configured to load the mold cart onto the upper portion of the mold carrier; and an unloading side cart loading/unloading part configured to unload the mold cart loaded onto the mold carrier.

In the embodiment, a wheel may be provided on a lower portion of the mold carrier, and the mold carrier may move, by means of the wheel, on an upper portion of a circulation rail formed on a floor provided outside the circulation conveyance part.

In the embodiment, the cart loading/unloading part may include: a cart transfer device configured to lift the mold cart; at least one of an X-axis drive part configured to transfer the cart transfer device in an X-axis direction and a Y-axis drive part configured to transfer the cart transfer device in a Y-axis direction; and a rotation drive part configured to rotate the cart transfer device.

In addition, the cart transfer device may include a lifting fork configured to support a lower surface of the mold cart.

In the embodiment, the cart transfer device may include: a drive bar connected to the lifting fork to raise or lower the lifting fork; a drive link configured to raise or lower the drive bar; and a link drive part connected to one side of the drive link and configured to operate the drive link.

In the embodiment, the mold carrier may include: a carrier frame having a lower portion on which the wheel is provided; and first and second cart supports provided on an upper portion of the carrier frame and disposed to support the mold cart.

In the embodiment, the first cart support may have a first coupling groove having a groove shape, a first coupling portion having a bar shape may be provided on a lower portion of the mold cart and span the first coupling groove, the second cart support may have a second coupling groove having a groove shape, and a second coupling portion having a bar shape may be provided on the lower portion of the mold cart and span the second coupling groove.

In addition, at least one of the first and second coupling portions may have conical shapes having cross-sections expanding from two opposite sides of a center bar.

In addition, the first cart support may further include a first buffer support part configured to support a lower surface of the mold cart, and the second cart support may further include a second buffer support part configured to support the lower surface of the mold cart.

In the embodiment, the mold carrier may have a first connecting part configured to supply power, air, or hot water to the mold cart, the mold cart may have a second connecting part connected to the first connecting part, and the second connector may be connected to the first connector when the mold cart is loaded onto the mold carrier.

In the embodiment, an alignment pin may protrude from the first connecting part, and an alignment pin through-hole may be provided in the second connecting part so that the alignment pin is inserted into the alignment pin through-hole.

The present invention provides a method of manufacturing a foam-molded article by using the circulating-type foam-molded article manufacturing device according to claim 1, the method including circulating the mold carrier, onto which the mold cart on which the foam-molded article mold is mounted is loaded, along the production line by the circulation conveyance part; inputting a foam material to the foam-molded article mold, forming the foam-molded article, and ejecting the foam-molded article; unloading the mold cart from the mold carrier by using an unloading side cart loading/unloading part of the cart loading/unloading part; and loading the mold cart, on which the foam-molded article mold to be replaced is mounted, onto the empty mold carrier by using a loading side cart loading/unloading part of the cart loading/unloading part.

According to the present invention, the mold carriers may be continuously circulated along the production line, and the mold carts, on which the molds are mounted, may be loaded onto or unloaded from the mold carriers that circulate along the production line, such that the entire system may be simplified.

In the system in the related art, because the mold carriage, on which the mold is mounted, needs to be loaded to the production line or unloaded from the production line, the replacement line for loading and unloading the mold carriage needs to be provided, which causes a problem in that the configuration of the system is complicated. In contrast, the present invention solves the problem in the related art.

In addition, according to the present invention, the mold carts 10, on which the foam-molded article manufacturing molds 11 are mounted, are configured to be replaced, such that the stability of the apparatus is improved, and the time for which the molds are replaced is shortened.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE DRAWINGS

FIG. 1 is a top plan view of a circulating-type foam-molded article manufacturing device according to an embodiment of the present invention.
FIG. 2 is a perspective view of the circulating-type foam-molded article manufacturing device according to the embodiment of the present invention.
FIG. 3 is a perspective view illustrating a state in which a mold cart is coupled to a mold carrier in the circulating-type foam-molded article manufacturing device according to the embodiment of the present invention.
FIG. 4 is a front view illustrating a state in which the mold cart (a mold is not illustrated) is coupled to the mold carrier in the circulating-type foam-molded article manufacturing device according to the embodiment of the present invention.
FIG. 5A is a view illustrating a configuration in which the mold carrier and the mold cart are coupled at part A in FIG. 4.
FIG. 5B is a view illustrating a configuration in which the mold carrier and the mold cart are coupled at part B in FIG. 4.
FIGS. 6A and 6B are views illustrating a configuration in which a connecting part provided on the mold cart is connected to a connecting part of the mold carrier in the circulating-type foam-molded article manufacturing device according to the embodiment of the present invention.
FIG. 7 is a perspective view of a cart loading/unloading part for loading or unloading the mold cart in the circulating-type foam-molded article manufacturing device according to the embodiment of the present invention.
FIG. 8 is a view illustrating a state in which the mold cart is lifted to a cart transfer device of the cart loading/unloading part in the circulating-type foam-molded article manufacturing device according to the embodiment of the present invention.
FIG. 9 is a view illustrating a state in which the mold cart loaded onto the mold carrier is lifted by operating the cart loading/unloading part in the circulating-type foam-molded article manufacturing device according to the embodiment of the present invention.
FIG. 10 is a view illustrating a state in which the mold cart is transferred from the mold carrier by operating the cart loading/unloading part in the circulating-type foam-molded article manufacturing device according to the embodiment of the present invention.
FIG. 11 is a view illustrating a state in which the cart loading/unloading part transfers the mold cart to a separate carriage in the circulating-type foam-molded article manufacturing device according to the embodiment of the present invention.

It should be understood that the appended drawings are not necessarily to scale, presenting a somewhat simplified representation of various features illustrative of the basic principles of the invention. The specific design features of the present invention as disclosed herein, including, for example, specific dimensions, orientations, locations, and shapes will be determined in part by the particular intended application and use environment.

In the figures, reference numbers refer to the same or equivalent parts of the present invention throughout the several figures of the drawing.

### DETAILED DESCRIPTION

Hereinafter, exemplary embodiments of the present invention will be described in detail with reference to the accompanying drawings. First, in assigning reference numerals to constituent elements of the respective drawings, it should be noted that the same constituent elements will be designated by the same reference numerals, if possible, even though the constituent elements are illustrated in different drawings. In addition, in the description of the present invention, the specific descriptions of publicly known related configurations or functions will be omitted when it is determined that the specific descriptions may obscure the subject matter of the present invention. Further, the exemplary embodiments of the present invention will be described below, but the technical spirit of the present invention is not limited thereto and may of course be modified and variously carried out by those skilled in the art.

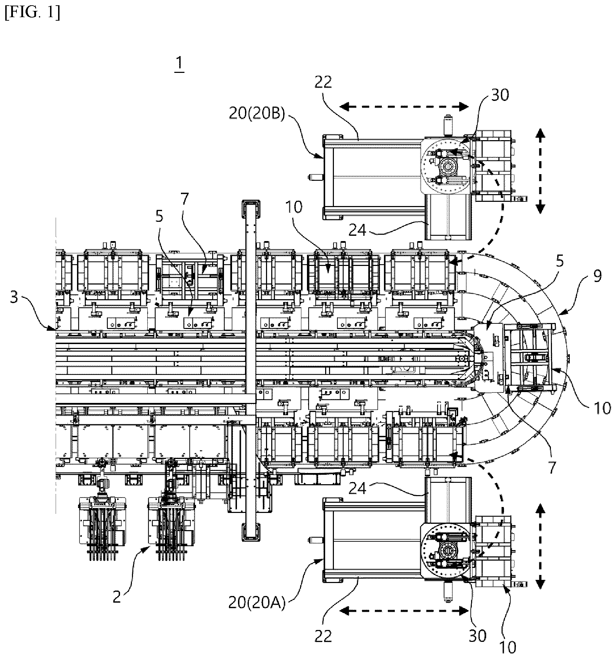

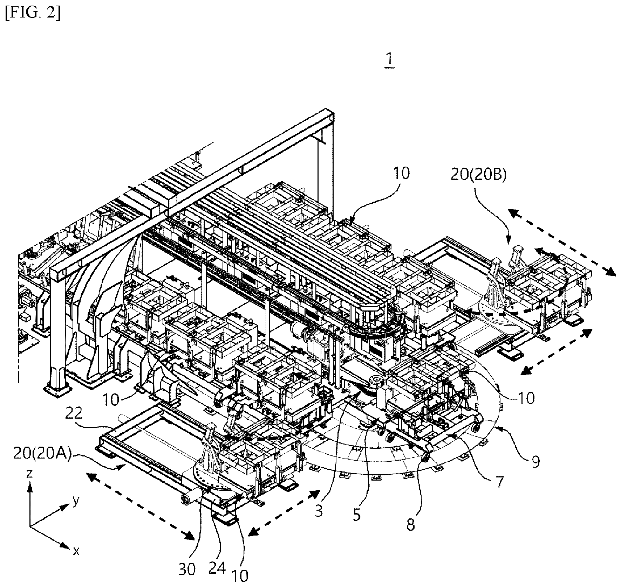

FIG. 1 is a top plan view of a circulating-type foam-molded article manufacturing device according to an embodiment of the present invention, and FIG. 2 is a perspective view of the circulating-type foam-molded article manufacturing device according to the embodiment of the present invention.

A circulating-type foam-molded article manufacturing device 1 according to an embodiment of the present invention includes a circulation conveyance part 3, carrier support parts 5, mold carriers 7, a circulation rail 9, mold carts 10, and a cart loading/unloading part 20.

The circulation conveyance part 3 refers to a kind of conveyor device configured to circulate in a predetermined direction. In the embodiment, the circulation conveyance part 3 may be configured as a chain. FIGS. 1 and 2 illustrate only a part of the circulating-type foam-molded article manufacturing device 1 including the circulation conveyance part 3, and the circulation conveyance part 3 may be disposed in an elliptical shape.

One side of the carrier support part 5 is supported by the circulation conveyance part 3 and moved by the circulation conveyance part 3. The mold carrier 7 is coupled to the other side of the carrier support part 5. A plurality of wheels 8 is provided on a lower portion of the mold carrier 7, and the wheels 8 of the mold carrier 7 roll on an upper portion of the circulation rail 9, such that the mold carrier 7 may move. The circulation rail 9 is provided outside the circulation conveyance part 3 and disposed in an elliptical shape, like the circulation conveyance part 3. However, in the embodiment of the present invention, the circulation rail 9 may not be separately provided. The wheels 8 of the mold carrier 7 may be supported on a flat ground surface and roll.

The mold cart 10 may be loaded onto an upper portion of the mold carrier 7. The mold cart 10 may be equipped with a foam-molded article manufacturing mold (hereinafter, simply referred to as a 'mold').

The cart loading/unloading part 20 may load the mold cart 10 onto the mold carrier 7 or unload the mold cart 10 loaded onto the mold carrier 7.

In the embodiment, the cart loading/unloading part 20 includes an unloading side cart loading/unloading part 20A configured to serve to unload the mold cart 10 loaded onto the mold carrier 7, and a loading side cart loading/unloading part 20B configured to serve to load the mold cart 10 onto the empty mold carrier 7.

In FIG. 1, the circulating-type foam-molded article manufacturing device 1 further includes foam material input devices 2 configured to input a foam material onto a mold accommodated in the mold cart 10. An example will be described in which the circulation conveyance part 3 rotates counterclockwise. In this case, the unloading side cart loading/unloading part 20A may be provided in the vicinity of a point at which a rotation section of the circulation conveyance part 3 starts, and a loading side cart loading/unloading part 20B may be provided at a point at which a rotation section of the circulation conveyance part 3 ends. The circulating-type foam-molded article manufacturing device 1 configures a production line that performs a process of inputting the foam material to the mold of the mold cart 10 that is loaded onto the mold carrier 7 and moves, forming a foam-molded article by foaming the foam material, and ejecting the foam-molded article.

When it is necessary to replace the molds, the unloading side cart loading/unloading part 20A may unload the existing mold cart 10 loaded onto the mold carrier 7, and the loading side cart loading/unloading part 20B may load a new mold cart 10 onto the empty mold carrier 7.

The unloading side cart loading/unloading part 20A and the loading side cart loading/unloading part 20B may be configured in the same way. A configuration of the cart loading/unloading part 20, which is any one of the unloading side cart loading/unloading part 20A and the loading side cart loading/unloading part 20B, will be described.

The cart loading/unloading part 20 may include a cart transfer device 30, and an X-axis drive part 22 and a Y-axis drive part 24 configured to move the cart transfer device 30 in an X-axis direction and a Y-axis direction. In addition, the cart transfer device 30 may rotate about a Z-axis.

The cart transfer device 30 may support the mold cart 10 and load the mold cart 10 onto the empty mold carrier 7 or unload the mold cart 10, which is loaded onto the mold carrier 7, from the mold carrier 7.

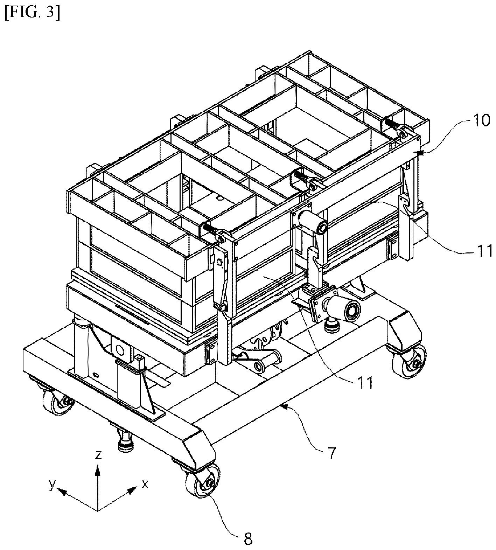

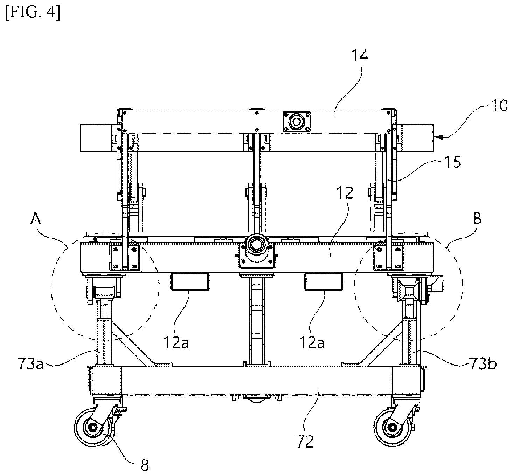

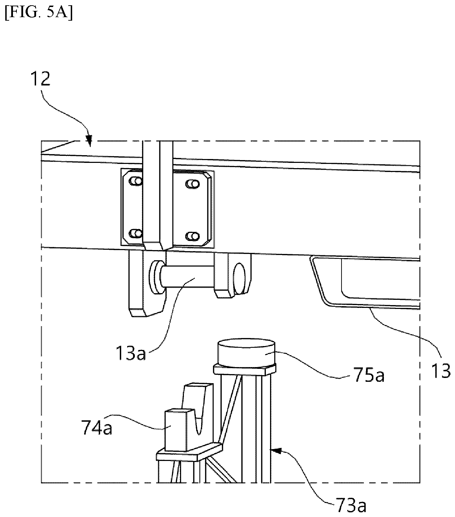

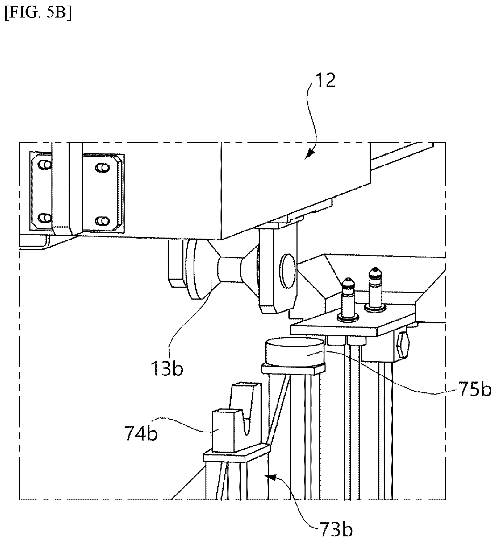

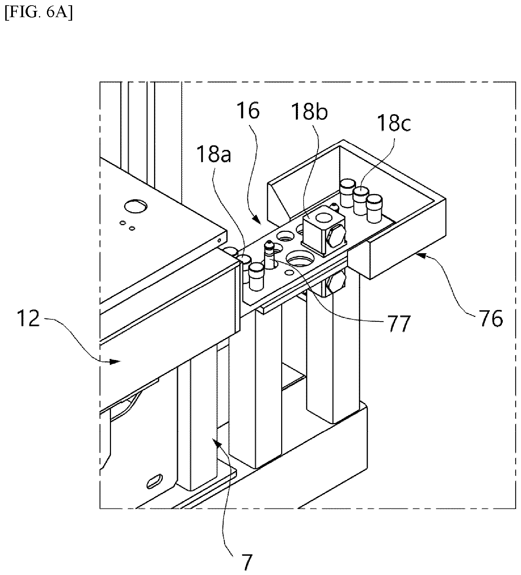

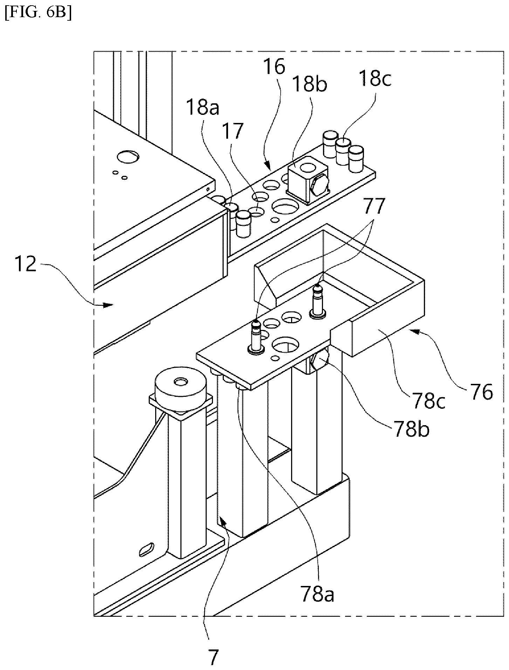

FIG. 3 is a perspective view illustrating a state in which the mold cart is coupled to the mold carrier in the circulating-type foam-molded article manufacturing device according to the embodiment of the present invention, and FIG. 4 is a front view illustrating a state in which the mold cart (the mold is not illustrated) is coupled to the mold carrier in the circulating-type foam-molded article manufacturing device according to the embodiment of the present invention. FIG. 5A is a view illustrating a configuration in which the mold carrier and the mold cart are coupled at part A in FIG. 4, and FIG. 5B is a view illustrating a configuration in which the mold carrier and the mold cart are coupled at part B in FIG. 4. In addition, FIGS. 6A and 6B are views illustrating a configuration in which a connecting part provided on the mold cart is connected to a connecting part of the mold carrier in the circulating-type foam-molded article manufacturing device according to the embodiment of the present invention.

With reference to FIG. 3, the mold cart 10 is loaded onto the upper portion of the mold carrier 7 having the lower portion on which the wheels 8 are provided. The mold cart 10 may accommodate therein at least one foam-molded article manufacturing mold 11. That is, the foam-molded article manufacturing mold 11 may be loaded to or unloaded from the mold carrier 7 in the state in which the foam-molded article manufacturing mold 11 is accommodated in the mold cart 10. Meanwhile, in the drawings for explaining the present invention, for convenience of description, the mold cart 10 is illustrated, and the mold 11 is sometimes not illustrated. In the embodiment of the present invention, it is understood that the mold 11 may be loaded to or unloaded from the mold carrier 7 in the state in which the mold carrier 7 is mounted on the mold cart 10.

With reference to FIG. 4, the mold carrier 7 includes a carrier frame 72, cart supports 73a and 73b provided at an upper side of the carrier frame 72. The first cart support 73a and the second cart support 73b may be provided at two opposite sides of the carrier frame 72.

The mold cart 10 may include a lower frame 12 and an upper frame 14, and vertical frames 15 configured to connect the lower frame 12 and the upper frame 14 in a vertical direction. Fork insertion portions 12a may be formed at a lower end of the lower frame 12.

With reference to FIGS. 5A and 5B, a first coupling portion 13a is provided at one side of the lower frame 12 of the mold cart 10 and supported on the first cart support 73a of the mold cart 10, and a second coupling portion 13b is provided at the other side of the lower frame 12 of the mold cart 10 and supported on the second cart support 73b of the mold cart 10. In the embodiment, the first coupling portion 13a and the second coupling portion 13b may each have a bar shape. In addition, the first coupling portion 13a may have a cylindrical bar shape, and the second coupling portion 13b may have a cylindrical bar disposed at a center thereof, and conical shapes having cross-sections expanding from two opposite sides of the cylindrical bar. Because the two opposite sides of the second coupling portion 13b have conical shapes, the transverse position of the mold cart 10 may be adjusted when the mold cart 10 is loaded onto the mold carrier 7.

The first cart support 73a of the mold carrier 7 may have a first coupling groove 74a and a first buffer support part 75a, and the second cart support 73b of the mold carrier 7 may have a second coupling groove 74b and a second buffer support part 75b.

The first coupling groove 74a is formed as a 'V'-shaped or 'U'-shaped groove, and the first coupling portion 13a is coupled to the first coupling groove 74a. The first buffer support part 75a supports a bottom surface of the lower frame 12 of the mold cart 10. The second coupling groove 74b is formed in a 'V'-shaped or 'U'-shaped groove, and the second coupling portion 13b is coupled to the second coupling groove 74b. The second buffer support part 75b supports the bottom surface of the lower frame 12 of the mold cart 10. The first buffer support part 75a and the second buffer support part 75b may each be made of a material such as rubber.

With reference to FIGS. 6A and 6B, a first connecting part 76 is provided on the mold carrier 7, and a second connecting part 16 is provided on the mold cart 10. The first connecting part 76 and the second connecting part 16, which are illustrated in FIGS. 6A and 6B, may be provided at rear sides of the mold carrier 7 and the mold cart 10 illustrated in FIG. 4.

Power, air, hot water, and the like for operating the mold 11 accommodated in the mold cart 10 may be supplied through the mold carrier 7. The mold carrier 7 may receive power, air, hot water, and the like through the carrier support part 5 and deliver the air, the hot water, and the like to the mold cart 10.

In the embodiment, the first connecting part 76 is provided on the mold carrier 7, and the second connecting part 16 is provided on the mold cart 10. The first connecting part 76 and the second connecting part 16 may be provided in panel shapes facing each other. The second connecting part 16 may protrude laterally from the lower frame 12 of the mold cart 10. The second connecting part 16 may be coupled to the first connecting part 76 when the mold cart 10 is loaded onto the mold carrier 7.

A power supply part 78a, an air supply part 78b, and a hot water supply part 78c (invisible in the drawings and only a reference numeral is indicated) are provided on the first connecting part 76. In addition, an alignment pin 77 protrudes from the first connecting part 76.

A power accommodation portion 18a, an air accommodation portion 18b, and a hot water accommodation portion 18c are provided on the second connecting part 16, and alignment pin through-holes 17 are formed in the second connecting part 16.

When the second connecting part 16 is coupled to the first connecting part 76, the alignment pin 77 is inserted into the alignment pin through-hole 17, such that a coupling position is adjusted. In addition, the power accommodation portion 18a, the air accommodation portion 18b, and the hot water accommodation portion 18c are respectively coupled to the power supply part 78a, the air supply part 78b, and the hot water supply part 78c, such that power, air, or hot water may be supplied from the mold carrier 7 to the mold cart 10.

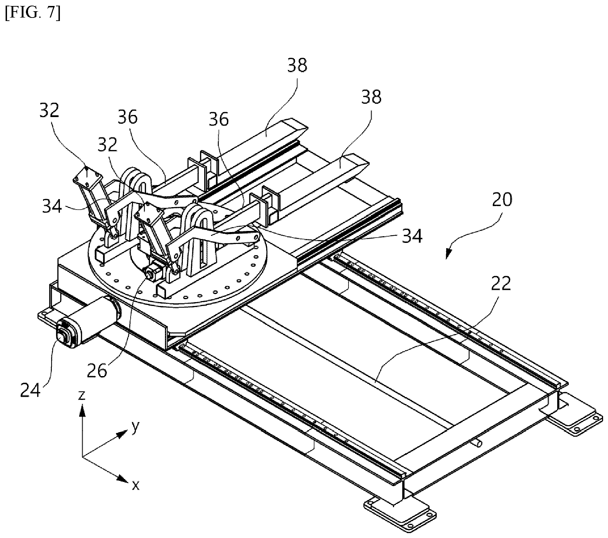

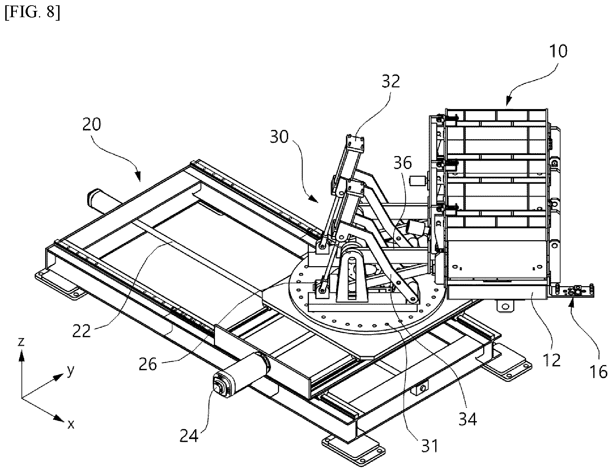

FIG. 7 is a perspective view of the cart loading/unloading part for loading or unloading the mold cart in the circulating-type foam-molded article manufacturing device according to the embodiment of the present invention, and FIG. 8 is a view illustrating a state in which the mold cart is lifted to the cart transfer device of the cart loading/unloading part in the circulating-type foam-molded article manufacturing device according to the embodiment of the present invention.

The cart loading/unloading part 20 includes the cart transfer device 30, the X-axis drive part 22 configured to move the cart transfer device 30 in the X-axis direction, the Y-axis drive part 24 configured to move the cart transfer device 30 in the Y-axis direction, and a rotation drive part 26 configured to rotate the cart transfer device 30.

In the embodiment, the cart transfer device 30 may include a base part 31, and link drive parts 32, drive links 34, drive bars 36, and lifting forks 38 provided on an upper portion of the base part 31. The base part 31 may be rotated by the rotation drive part 26 and moved in the X-axis direction or the Y-axis direction by the X-axis drive part 22 and the Y-axis drive part 24. In the embodiment, the X-axis drive part 22 and the Y-axis drive part 24 may be configured in a ball-screw manner. However, the configuration of the present invention is not limited thereto.

The link drive part 32 operates the drive link 34. In the embodiment, the link drive part 32 may be implemented in a cylinder or ball-screw manner so that the link drive part 32 is operated by hydraulic pressure or pneumatic pressure. The drive link 34 may be configured by combining a plurality of links. When one side of the drive link 34 is raised or lowered by the link drive part 32, the drive link 34 may raise or lower the drive bar 36 connected to the drive link 34. In the embodiment, the drive link 34 is a link assembly coupled in an 'X' shape. The lifting fork 38 is connected to the drive bar 36 and raised or lowered as the drive bar 36 is raised or lowered.

The lifting fork 38 may be inserted into the fork insertion portion 12a of the mold cart 10 illustrated in FIG. 4, and the mold cart 10 is raised or lowered by the lifting fork 38.

The link drive parts 32, the drive links 34, and the drive bars 36 of the cart transfer device 30 are configured to raise or lower the lifting forks 38. Therefore, in the embodiment of the present invention, other components, which are substituted for the link drive parts 32, the drive links 34, and the drive bars 36 of the cart transfer device 30, may be employed as long as the components may operate the lifting forks 38. For example, components, such as a lift cylinder or/and a lift chain, for operating a fork of a forklift, may be employed for the cart transfer device.

A method of unloading the mold cart 10 from the mold carrier 7 by using the cart loading/unloading part 20 will be described.

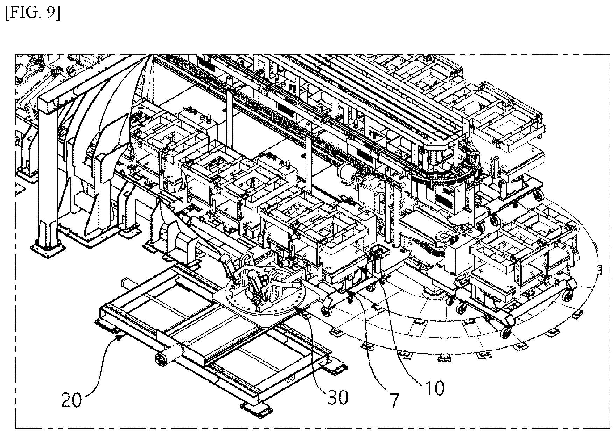

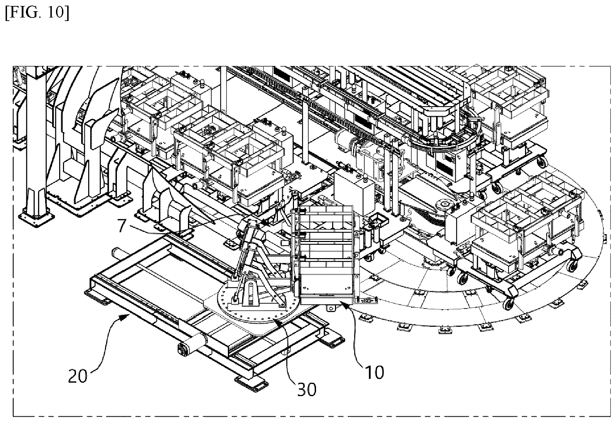

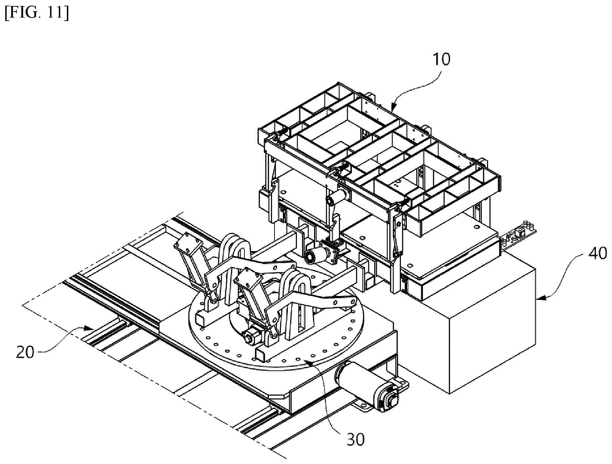

FIG. 9 is a view illustrating a state in which the mold cart loaded onto the mold carrier is lifted by operating the cart loading/unloading part in the circulating-type foam-molded article manufacturing device according to the embodiment of the present invention. FIG. 10 is a view illustrating a state in which the mold cart is transferred from the mold carrier by operating the cart loading/unloading part in the circulating-type foam-molded article manufacturing device according to the embodiment of the present invention, and FIG. 11 is a view illustrating a state in which the cart loading/unloading part transfers the mold cart to a separate carriage in the circulating-type foam-molded article manufacturing device according to the embodiment of the present invention.

With reference to FIG. 9, when it is necessary to replace the mold cart 10 loaded onto the mold carrier 7, the corresponding mold carrier 7 is positioned on the unloading side cart loading/unloading part 20A, and the cart transfer device 30 of the unloading side cart loading/unloading part 20A lifts the mold cart 10 of the mold carrier 7. In the embodiment, the lifting forks 38 of the cart transfer device 30 are inserted into the fork insertion portions 12a of the mold cart 10, and the lifting forks 38 are raised, such that the mold cart 10 may be lifted.

With reference to FIG. 10, the cart transfer device 30 may transfer and unload the mold cart 10 by operating the X-axis drive part 22, the Y-axis drive part 24, and the rotation drive part 26 of the unloading side cart loading/unloading part 20A.

With reference to FIG. 11, the mold cart 10 may be transferred to a separate carriage 40 and then unloaded to the outside. In case that the mold cart 10 is intended to be loaded onto the empty mold carrier 7 from the loading side cart loading/unloading part 20B, the mold cart 10 to be replaced may be transferred to the loading side cart loading/unloading part 20B by means of the carriage 40.

Meanwhile, the operation of loading the mold cart 10 onto the mold carrier 7 may be performed by reversely performing the following operation of unloading the mold cart 10 from the mold carrier 7.

According to the present invention, the mold carriers 7 may be continuously circulated along the production line by the circulation conveyance parts 3, and the mold carts 10, on which the molds 11 are mounted, may be loaded onto or unloaded from the mold carriers 7 that circulate along the production line, such that the entire system may be simplified. In addition, according to the present invention, the mold carts 10, on which the foam-molded article manufacturing molds 11 are mounted, are configured to be replaced, such that the stability of the apparatus is improved, and the time for which the molds are replaced is shortened.

The above description is simply given for illustratively describing the technical spirit of the present invention, and those skilled in the art to which the present invention pertains will appreciate that various modifications, changes, and substitutions are possible without departing from the essential characteristic of the present invention. Accordingly, the embodiments disclosed in the present invention and the accompanying drawings are intended not to limit but to describe the technical spirit of the present invention, and the scope of the technical spirit of the present invention is not limited by the embodiments and the accompanying drawings. The protective scope of the present invention should be construed based on the following claims, and all the technical spirit in the equivalent scope thereto should be construed as falling within the scope of the present invention.

As described above, the exemplary embodiments have been described and illustrated in the drawings and the specification. The exemplary embodiments were chosen and described in order to explain certain principles of the invention and their practical application, to thereby enable others skilled in the art to make and utilize various exemplary embodiments of the present invention, as well as various alternatives and modifications thereof. As is evident from the foregoing description, certain aspects of the present invention are not limited by the particular details of the examples illustrated herein, and it is therefore contemplated that other modifications and applications, or equivalents thereof, will occur to those skilled in the art. Many changes, modifications, variations and other uses and applications of the present construction will, however, become apparent to those skilled in the art after considering the specification and the accompanying drawings. All such changes, modifications, variations and other uses and applications which do not depart from the spirit and scope of the invention are deemed to be covered by the invention which is limited only by the claims which follow.

## Claims

1. A circulating-type foam-molded article manufacturing device comprising:
a circulation conveyance part configured to circulate along a production line;
a mold carrier connected to the circulation conveyance part and configured to circulate along the production line, the mold carrier being configured to load thereon or unload therefrom a mold cart, the mold cart having a foam-molded article manufacturing mold mounted thereon; and
a cart loading/unloading part configured to load the mold cart onto an upper portion of the mold carrier or unload the mold cart from the upper portion of the mold carrier.

2. The circulating-type foam-molded article manufacturing device of claim 1,
wherein the cart loading/unloading part comprises:
a loading-side cart loading/unloading part configured to load the mold cart onto the upper portion of the mold carrier; and
an unloading-side cart loading/unloading part configured to unload the mold cart loaded onto the mold carrier.

3. The circulating-type foam-molded article manufacturing device of claim 1 or 2,
wherein a wheel is disposed on a lower portion of the mold carrier, and the mold carrier is configured to move, by the wheel, on an upper portion of a circulation rail disposed on a floor outside the circulation conveyance part.

4. The circulating-type foam-molded article manufacturing device of anyone of claims 1-3,
wherein the cart loading/unloading part comprises:
a cart transfer device configured to lift the mold cart;
at least one of an X-axis drive part and a Y-axis drive part, the X-axis drive part being configured to transfer the cart transfer device in an X-axis direction, the Y-axis drive part being configured to transfer the cart transfer device in a Y-axis direction; and
a rotation drive part configured to rotate the cart transfer device.

5. The circulating-type foam-molded article manufacturing device of claim 4,
wherein the cart transfer device comprises a lifting fork configured to support a lower surface of the mold cart.

6. The circulating-type foam-molded article manufacturing device of claim 5, wherein the cart transfer device comprises:
a drive bar connected to the lifting fork to raise or lower the lifting fork;
a drive link configured to raise or lower the drive bar; and
a link drive part connected to one side of the drive link and configured to operate the drive link.

7. The circulating-type foam-molded article manufacturing device of anyone of claims 1-6,
wherein the mold carrier comprises:
a carrier frame having a lower portion on which a wheel is disposed; and
a first cart support and a second cart support, each being disposed on an upper portion of the carrier frame and disposed to support the mold cart.

8. The circulating-type foam-molded article manufacturing device of claim 7, wherein the first cart support has a first coupling groove having a first groove shape, a first coupling portion having a first bar shape is disposed on a lower portion of the mold cart and spans the first coupling groove, the second cart support has a second coupling groove having a second groove shape, and a second coupling portion having a second bar shape is disposed on the lower portion of the mold cart and spans the second coupling groove.

9. The circulating-type foam-molded article manufacturing device of claim 8,
wherein at least one of the first coupling portion and the second coupling portion has conical shapes having cross-sections expanding from two opposite sides of a center bar of the at least one of the first coupling portion and the second coupling portion.

10. The circulating-type foam-molded article manufacturing device of claim 8 or 9,
wherein the first cart support further comprises a first buffer support part configured to support a lower surface of the mold cart, and the second cart support further comprises a second buffer support part configured to support the lower surface of the mold cart.

11. The circulating-type foam-molded article manufacturing device of anyone of claims 7-10,
wherein the mold carrier has a first connecting part configured to supply power, air, or hot water to the mold cart, the mold cart has a second connecting part configured to be connected to the first connecting part, and the second connecting part is configured to be connected to the first connecting part when the mold cart is loaded onto the mold carrier.

12. The circulating-type foam-molded article manufacturing device of claim 11,
wherein an alignment pin protrudes from the first connecting part, and an alignment pin through-hole is defined in the second connecting part to insert therein the alignment pin.

13. A method of manufacturing a foam-molded article by using the circulating-type foam-molded article manufacturing device according to anyone of claims 1-12, the method comprising:
circulating the mold carrier, onto which the mold cart on which the foam-molded article manufacturing mold is mounted is loaded, along the production line by the circulation conveyance part;
inputting a foam material to the foam-molded article manufacturing mold, forming the foam-molded article, and ejecting the foam-molded article;
unloading the mold cart from the mold carrier by using an unloading-side cart loading/unloading part of the cart loading/unloading part; and
loading the mold cart, on which the foam-molded article manufacturing mold to be replaced is mounted, onto the mold carrier that is empty by using a loading-side cart loading/unloading part of the cart loading/unloading part.
